# EUROPEAN PATENT SPECIFICATION

(11) **EP 4 425 974 B1**
(45) Date of publication and mention of the grant of the patent: **29.07.2026**
(21) Application number: 22887658.7
(22) Date of filing: 27.10.2022
(51) Int. Cl.: H04W 4/40, H04W 4/12, H04W 28/06, H04W 88/18

(54) **METHOD FOR TRANSMITTING FIRST MESSAGE BY FIRST DEVICE IN WIRELESS COMMUNICATION SYSTEM, AND APPARATUS TEHREFOR**
VERFAHREN ZUR ÜBERTRAGUNG EINER ERSTEN NACHRICHT DURCH EINE ERSTE VORRICHTUNG IN EINEM DRAHTLOSKOMMUNIKATIONSSYSTEM UND VORRICHTUNG DAFÜR
PROCÉDÉ DE TRANSMISSION D'UN PREMIER MESSAGE PAR UN PREMIER DISPOSITIF DANS UN SYSTÈME DE COMMUNICATION SANS FIL, ET APPAREIL ASSOCIÉ

(30) Priority: 27.10.2021 KR 20210144814
(43) Date of publication of application: 04.09.2024
(73) Proprietor: LG Electronics Inc., Yeongdeungpo-gu Seoul 07336 (KR)
(72) Inventor: HWANG, Jaeho, Seoul 06772 (KR); SONG, Min, Seoul 06772 (KR); KIM, Hakseong, Seoul 06772 (KR); SEO, Hanbyul, Seoul 06772 (KR)
(74) Representative: Frenkel, Matthias Alexander
(86) International application number: PCT/KR2022/016604
(87) International publication number: WO 2023/075463

(56) References cited:
- JP-A- 2011 071 701
- KR-A- 20180 040 620
- KR-A- 20180 112 842
- US-A1- 2006 274 701
- US-A1- 2018 152 819
- US-A1- 2018 152 819
- US-A1- 2020 259 935
- US-A1- 2021 144 415

## Description

### TECHNICAL FIELD

The present disclosure relates to a method of transmitting a first message by a first device, to a method of transmitting a second message by a second device, to a first device, to a second device and to a computer-readable storage medium, as set out in the appended set of claims.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

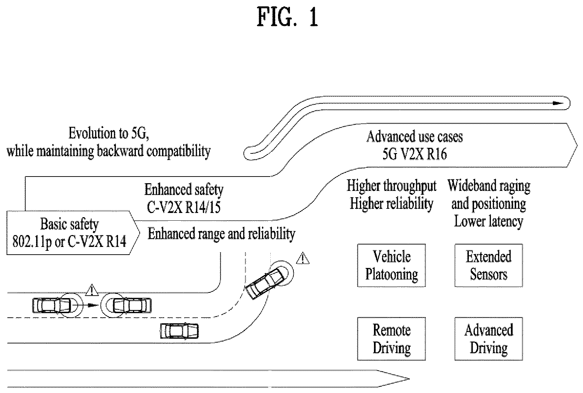

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.
US 2020/0259935 A1 is directed to systems and methods for data transmission based on a link layer packet structure including a header and a payload. A service distribution engine is configured to distribute data to receiver devices through a television service network. For single packets, a header extension flag field of an additional header indicates whether header extension fields are present, e.g., an extension type field for indicating a type of header extension, an extension length field for indicating the length of a header extension, and an extension field including a value of a header extension.
US 2018/0152819 A1 is directed to technology for eNodeB operable to perform vehicle-to-anything (V2X) communication within a wireless communication network. A UE can add V2X information in a header of a data packet that allows the eNB to decide if a V2X message is to be broadcast in a cell or sent directly to a ProSe/V2X function in a core Network.

### DISCLOSURE

### TECHNICAL PROBLEM

The present disclosure aims to provide a method and apparatus for configuring a header of a V2N message, which is received from a second device, including an extension flag field and an extension field for enabling a first device to obtain additional information on a message between user equipments (UEs) included in a vehicle-to-network (V2N) message without decoding the payload of the V2N message.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

The present invention is defined by the appended independent claims. Specific embodiments are defined by the dependent claims. A method of transmitting a first message by a first device in a wireless communication system includes: receiving a second message including a payload and a header including an extension flag field from a second device; and transmitting the first message to a first group based on the second message. The first device identifies an additional information type of an extension field additionally configured in the header based on the extension flag field and obtains additional information related to the payload from the extension field based on the additional information type. The first group is configured based on the additional information.

Alternatively, based on acquisition of information on a first device type from the extension field of which the additional information type is a device type, the first device may configure the first group by excluding devices corresponding to the first device type from a pre-registered subscription list.

Alternatively, the first device type may be a device type related to pedestrians.

Alternatively, the additional information type may be specified based on a position of a bit with a specific value in the extension flag field.

Alternatively, based on that a number of positions of bits with specific values in the extension flag field is N, the header may include N extension fields.

Alternatively, the first device may transmit the first message including the payload to the first group without decoding and encoding the payload included in the second message.

Alternatively, the method may further include transmitting a third message obtained by aggregating messages received from a plurality of devices to a first server.

Alternatively, a header of the third message may include: an extension flag field with a specific value configured at a bit position related to a first additional information type for message aggregation; an extension field including information on a number of the aggregated messages; and an extension field including information on a size of each message.

Alternatively, based on a most significant bit (MSB) of the extension flag field has a specific value, the header of the second message may further include a sub-extension flag field and a sub-extension field related to the sub-extension flag field.

Alternatively, the method may further include transmitting configuration information including information on the additional information type to the first device.

A method of transmitting a second message by a second device in a wireless communication system includes: receiving configuration information related to the second message from a first device; and transmitting the second message including a payload and a header including an extension flag field to the first device based on the configuration information. The header of the second message includes: the extension flag field having a specific value configured at a bit position related to an additional information type included in the configuration information; and an extension field including additional information related to the additional information type. A first message including the payload of the second message is transmitted to a first group configured based on the additional information through the first device.

A first device configured to transmit a first message in a wireless communication system includes: a radio frequency (RF) transceiver; and a processor connected to the RF transceiver. The processor is configured to: control the RF transceiver to receive a second message including a payload and a header including an extension flag field from a second device; control the RF transceiver to transmit the first message to a first group based on the second message; identify an additional information type of an extension field additionally configured in the header based on the extension flag field; and obtain additional information related to the payload from the extension field based on the additional information type. The first group is configured based on the additional information.

A second device configured to transmit a second message in a wireless communication system includes: an RF transceiver; and a processor connected to the RF transceiver. The processor is configured to control the RF transceiver to: receive configuration information related to the second message from a first device; and transmit the second message including a payload and a header including an extension flag field to the first device based on the configuration information. The header of the second message includes: the extension flag field having a specific value configured at a bit position related to an additional information type included in the configuration information; and an extension field including additional information related to the additional information type. A first message including the payload of the second message is transmitted to a first group configured based on the additional information through the first device.

A chipset configured to transmit a first message in a wireless communication system may include: at least one processor; and at least one memory operably connected to the at least one processor and configured to, when executed, cause the at least one processor to perform operations. The operations may include: receiving a second message including a payload and a header including an extension flag field from a second device; and transmitting the first message to a first group based on the second message. The at least one processor may be configured to: identify an additional information type of an extension field additionally configured in the header based on the extension flag field; and obtain additional information related to the payload from the extension field based on the additional information type. The first group may be configured based on the additional information.

A computer-readable storage medium including at least one computer program configured to perform operations of transmitting a first message in a wireless communication system. includes the at least one computer program, and the at least one computer program is stored on the computer-readable storage medium. The operations include: receiving a second message including a payload and a header including an extension flag field from a second device; and transmitting the first message to a first group based on the second message. The extension flag field includes information on a bit for identifying an additional information type of an extension field additionally configured in the header. The extension field includes additional information related to the payload for the identified additional information type. The first group is configured based on the additional information.

### ADVANTAGEOUS EFFECTS

According to various embodiments, an extension flag field and an extension field may be configured in the header of a vehicle-to-network (V2N) message to enable acquisition of additional information on a message between user equipments (UEs) included in the payload of the V2N message, thereby obtaining the additional information on the message between UEs without decoding the payload of the V2N message.

Additionally, a first device may rapidly obtain additional information on a message between UEs included in the payload of a received V2N message based on an extension flag field and an extension field included in the header of the V2N message.

Additionally, the first device may easily specify a first group to forward a received V2N message based on obtained additional information.

Additionally, the first device may generate a V2N message obtained by aggregating messages between a plurality of UEs based on an extension flag field and an extension field and then efficiently provide the generated V2N message to a server.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a radio protocol architecture for SL communication.
FIG. 7 illustrates UEs performing V2X or SL communication.
FIG. 8 illustrates resource units for V2X or SL communication.
FIG. 9 is a diagram for explaining an ITS station reference architecture.
FIG. 10 illustrates an exemplary structure of an ITS station that may be designed and applied based on a reference architecture.
FIG. 11 is a diagram for explaining a method by which a V2N server forwards a V2N message received from a neighboring UE to a plurality of UEs through the Uu interface.
FIGS. 12, 13, and 14 are diagrams for explaining V2N-dedicated messages exchanged between a V2N server and UEs.
FIGS. 15 and 16 are diagrams for explaining a method by which a V2N server provides additional functions based on a V2N message in which an extension field is added in accordance with an extension flag field.
FIG. 17 is a diagram for explaining a method by which a V2N server filters transmission targets based on the header of a V2N message received from a UE.
FIGS. 18 and 19 are diagrams for explaining a method by which a V2N server provides an aggregated message obtained by aggregating received V2N messages based on an extension flag and extension field of a V2N header.
FIG. 20 is a diagram for explaining a method by which a first device configures a first group to receive a second message based on a header included in the second message.
FIG. 21 is a diagram for explaining a method by which a second device transmits a second message to a first device.
FIG. 22 illustrates a communication system applied to the present disclosure.
FIG. 23 illustrates wireless devices applicable to the present disclosure.
FIG. 24 illustrates another example of a wireless device to which the present disclosure is applied.
FIG. 25 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the embodiments are not limited thereto.

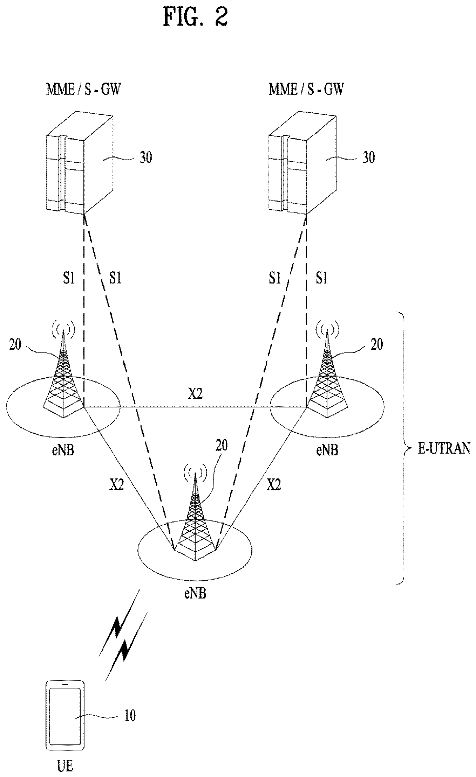

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

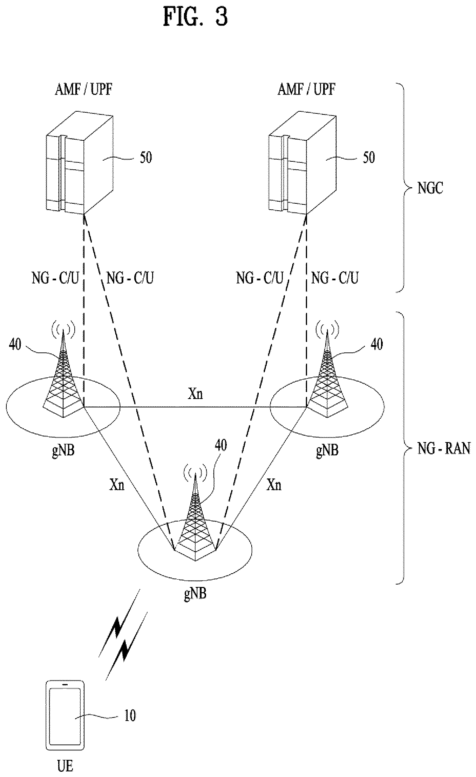

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

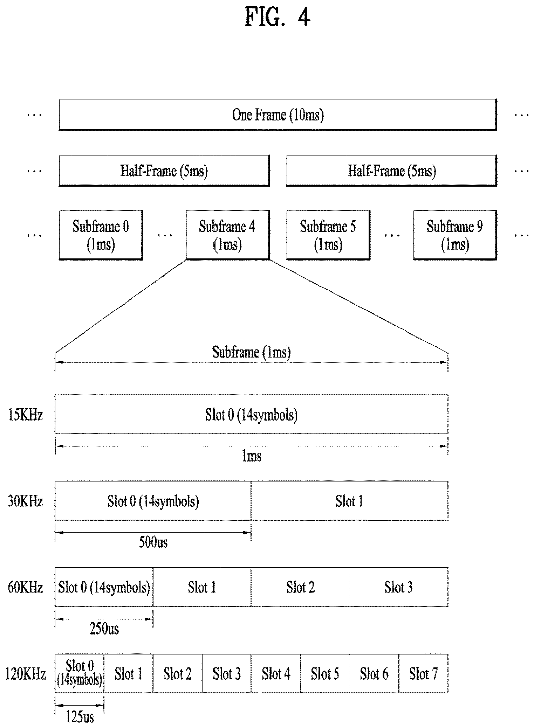

FIG. 4 illustrates the structure of a NR radio frame to which the present disclosure is applicable.

Referring to FIG. 4, a radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

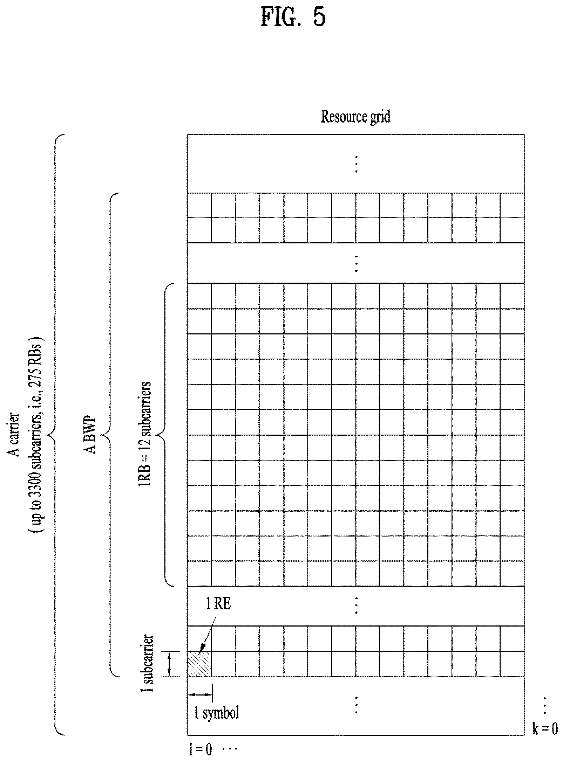

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

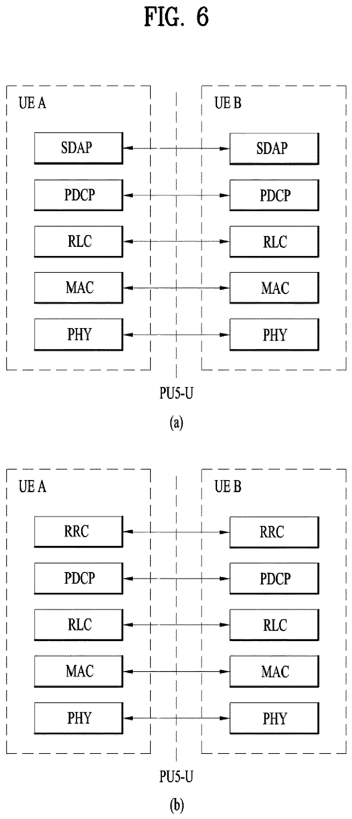

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

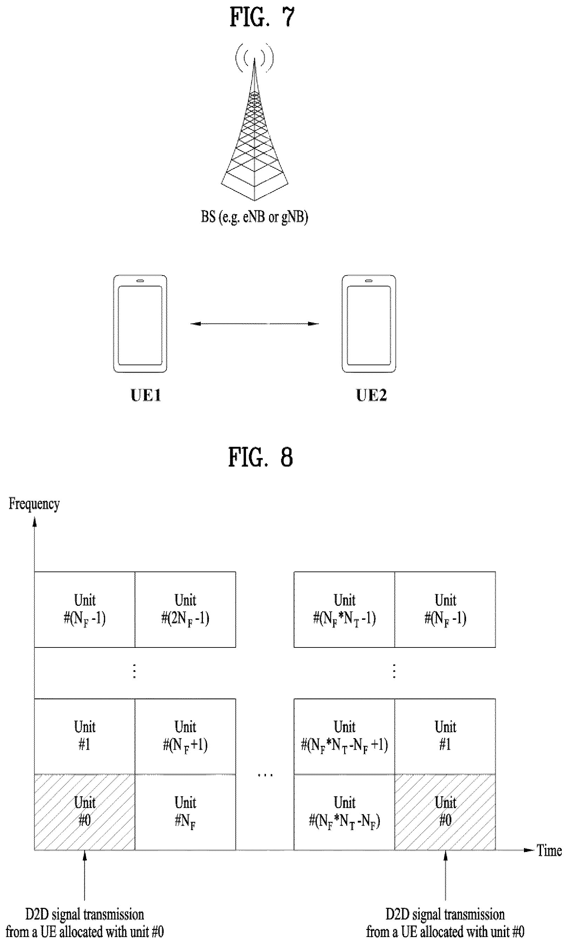

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### Vehicular Communications for ITS

An intelligent transport system (ITS) utilizing vehicle-to-everything (V2X) may mainly include an access layer, a network & transport layer, a facilities layer, an application layer, security, and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as ITS stations.

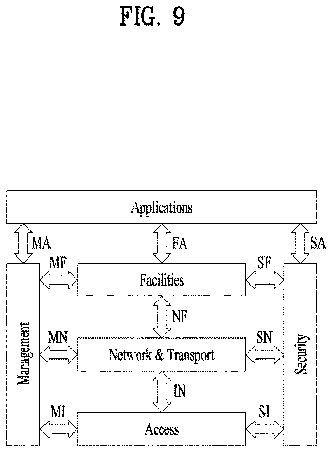

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.
MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

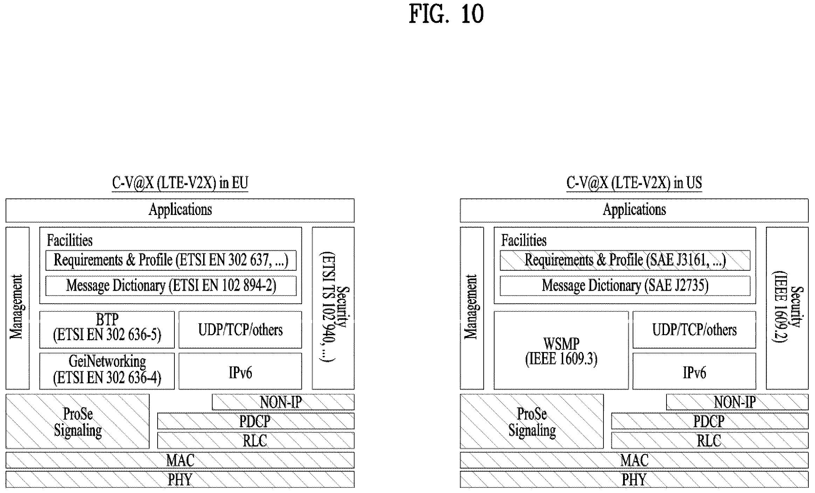

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g., MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG. 10, and there are transport protocols only for the ITS, such as the BTS.

The network layer serves to determine a logical address and a packet forwarding method/path and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multichannel operation (MCO) included in the data link layer of FIG. 10 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A Soft V2X system may be a system in which a Soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the Soft V2X server through the UU interface, and may include mobility information about the VRU, such as a position, a movement direction, a movement path, and a speed of the VRU. That is, the Soft V2X system may use a method of receiving mobility information of VRUs and/or vehicles related to V2X communication through the UU interface and controlling a driving route or a VRU movement flow of the VRU, etc. based on the mobility information received by the Soft V2X server, such as a network. The Soft V2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the Soft V2X system based on the UU interface. Through this, the user equipment or pedestrian equipment (VRU device) that is difficult to perform the direct communication (PC5, DSRC) can be protected from surrounding vehicles.

### Interchange operation for connecting multiple V2N platforms

When V2X messages are transmitted based on V2N, due to the long-range communication characteristics, a message uplinked from the server may be retransmitted to the UE in downlink according to predetermined rules. In this case, the message is encoded according to various encoding rules, posing a challenge for the server to decode the message to obtain information from the message.

Considering such a challenge, the present disclosure proposes the structure of a V2N messages (or Soft V2X message) including a V2X message for swift processing of the V2N message on the server.

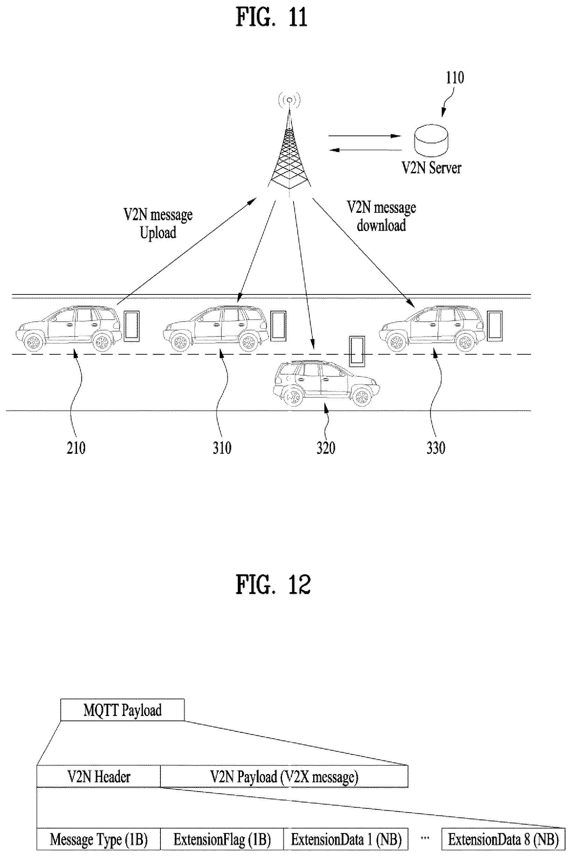

FIG. 11 is a diagram for explaining a method by which a V2N server forwards a V2N message received from a neighboring UE to a plurality of UEs through the Uu interface.

Referring to FIG. 11, a V2N server 110 may receive a V2N message transmitted from a neighboring UE 210 through the Uu interface. The V2N server 110 may forward the received V2N message to UEs 310, 320, and 330 that receive V2N-related services.

In this case, an ITS-specific V2X message or an independent message may be used as the V2N message. However, such V2N messages may be encoded in various ways. The V2N server needs to extract necessary information by decoding the V2N messages (hereinafter referred to as incoming V2N messages) for operations such as changing or filtering content according to specific conditions based on the received V2N message. In this case, the V2N server may experience significant overhead in decoding the V2N messages, leading to unnecessary delays in transmitting the V2N messages (hereinafter referred to as outgoing V2N messages) based on the received V2N messages. In typical V2N systems, the V2N server forwards messages according to the ID or location of a device.

Considering these issues, there is a need to define a V2N message (or V2N-dedicated message) capable of being decoded rapidly based on specific conditions at the V2N server. Hereinafter, the structure of the newly defined V2N message will be described in detail.

FIGS. 12, 13, and 14 are diagrams for explaining V2N messages exchanged between a V2N server and UEs.

Referring to FIG. 12, the V2N message includes a V2X message in the payload (MQTT payload) of the lower layer. Information on the above-described specific conditions and/or additional features may be encapsulated.

Specifically, the V2N message may consist of a V2N header (or Soft V2X header) and a V2N payload. The encoded V2X message may be included in the V2N payload. The V2N header (or Soft V2X header) may include MessageType indicating the type of V2X message, ExtensionFlag for extension, and ExtensionData corresponding to ExtensionFlag (or flag).

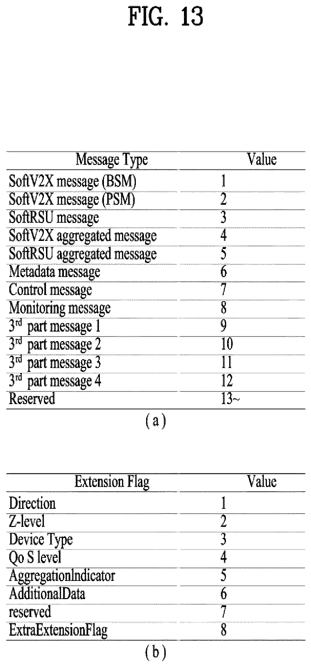

Here, MessageType may include information about the configuration and/or type of message (or V2X message) included in the V2N payload. Referring to FIG. 13(a), MessageType may indicate the type of V2X message through predefined values. For example, MessageType may distinguish whether the V2X message (or Soft V2X message) is a basic safety message (BSM) or a personal safety message (PSM) by indicating a value of 1 or 2. Alternatively, MessageType may indicate an RSU message transmitted by a Soft RSU, a metadata message for V2X services, or a control message including control data as well as the Soft V2X message through predefined values. In addition, MessageType may additionally indicate a third part message for providing messages from other V2N devices.

Additionally, the V2N message may additionally include an extension field in the V2N header to inform additional information (or supplementary information) about the above-described additional features. Here, the V2N message may have additional extension fields added as necessary (with predefined sizes) through ExtensionFlag (or ExtensionFlag field).

For example, as illustrated in FIG. 13(b), the ExtensionFlag field may be defined. The ExtensionFlag field has a bit-controlled structure. Specifically, when the least significant bit (LSB) is marked or when the first bit from the LSB is marked, an extension field containing additional information on the direction may be additionally included in the V2N header. When the second bit is marked, an extension field containing additional information about the Z-level may be additionally included in the V2N header. When the third bit is marked, an extension field containing additional information about the device type may be additionally included in the V2N header. When the fourth bit is marked, an extension field containing additional information about AggregationIndicator may be additionally included in the V2N header. When the fifth bit is marked, an extension field containing additional information about an AdditionalData field may be additionally included in the V2N header. The last bit from the LSB indicates ExtraExtensionFlag, which may be defined as the configuration for additional structure extension in the V2N header.

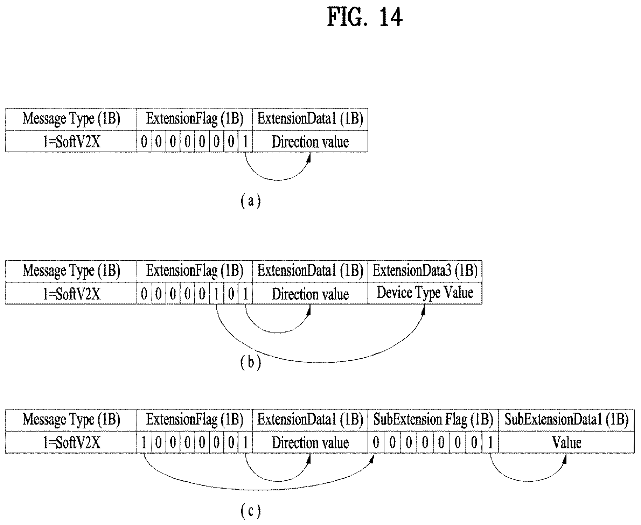

FIG. 14 shows examples in which extension fields containing additional information are additionally configured in a V2N header based on ExtensionFlag.

For example, referring to FIG. 14(a), when the first bit (from the LSB) in the ExtensionFlag field is (marked as) 1, the V2N header may additionally include or be configured with a first extension field about the direction (or containing information about the direction), which is an extension field of a predefined size (e.g., 1 byte). Referring to FIG. 14(b), when the first bit and third bit (from the LSB) in the ExtensionFlag field is (marked as) 1, the V2N header may additionally include or be configured with a first extension field containing direction information of a predefined size (e.g., 1 byte) and a third extension field containing information about the device type. In this case, the extension fields may be included in the V2N header in order from the LSB to the most significant bit (MSB).

Alternatively, referring to FIG. 14(c), when the last bit (or MSB) of ExtraExtensionFlag is 1, the V2N header may additionally include SubExtensionFlag indicating additional information (which is not yet defined) to be added in the future. SubExtensionFlag may indicate extension fields (included in the V2N header) for additional information not defined in ExtraExtensionFlag.

As described above, the V2N server may check summary information or additional information in the received V2X message through the V2N header of the V2N message, instead of immediately (re)transmitting the received V2X message as in the prior art.

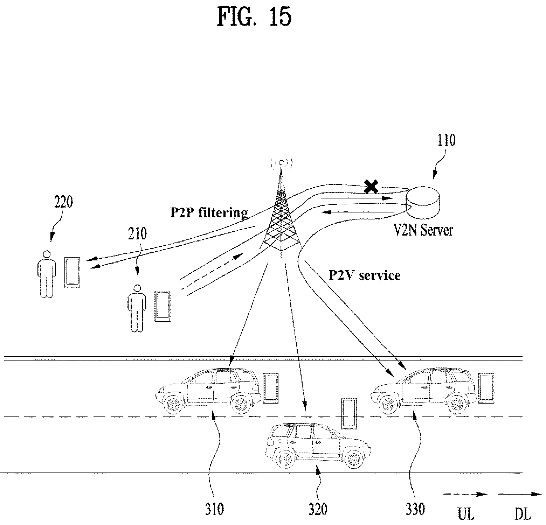

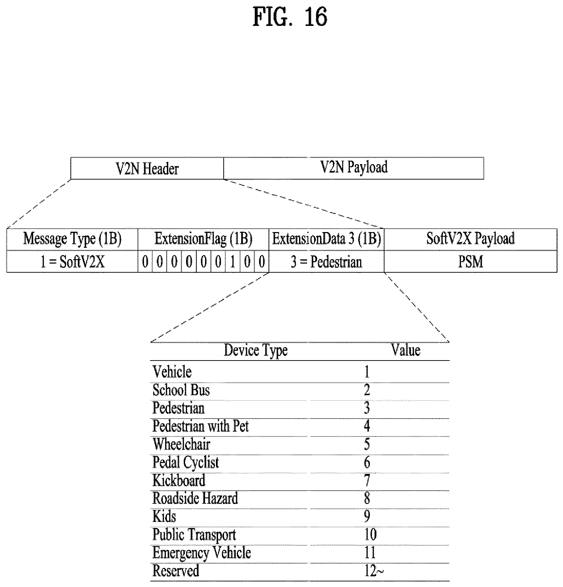

FIGS. 15 and 16 are diagrams for explaining a method by which a V2N server provides additional functions based on a V2N message in which an extension field is added in accordance with an extension flag field.

The V2N server may receive a V2N message with a V2N header, where an extension flag field and an extension field related to the extension flag field are additionally configured. The V2N server may provide the above-described additional functions based on the extension flag field and extension field included in the V2N message.

Referring to FIG. 15, the V2N server may perform additional functions related to filtering of messages or filtering of recipients of the messages based on an extension flag and extension field. For example, the V2N server may perform filtering of messages based on the type of device related to a V2X message obtained based on the extension flag and extension field.

Specifically, the V2N server may periodically receive V2N messages including the states of V2N devices from the V2N devices. The V2N server may forward the periodically received V2N messages to neighboring V2N devices. For example, the V2N server may periodically receive a V2X message including information on the location of a pedestrian located around the road and/or a V2N message including the V2X message from the pedestrian or a UE 210 of the pedestrian. The V2N server may forward the received V2N message to neighboring vehicles or neighboring UEs 310, 320, and 330. The neighboring vehicles or neighboring UEs 310, 320, and 330 may recognize nearby pedestrians and drive safely based on the V2N message received from the V2N server. However, other pedestrians or UEs 220 of the other pedestrians do not need to receive the V2N message about the location of the UE 210 of the pedestrian. Thus, when the V2N server obtains information about the type of device related to the V2X message included in a V2N payload from the extension flag and extension field included in the V2N header of the V2N message, the V2N server may specify or filter the recipient of the V2N message based on the device type information included in the extension field. For example, if the V2N header includes an extension flag indicating an extension field for the type of device and an extension field about information on pedestrians, the V2N server may perform a filtering operation to exclude a pedestrian device 220 from the recipients of the V2N messages (or an operation to block the path of the V2N message to the pedestrian devices 220). By performing the above operations, the V2N server not only conserves network resources but also reduces unnecessary operations of the pedestrian device 220. As described above, the V2N server may provide additional functions related to message filtering between pedestrians through extension of the V2N message (or extension of the V2N header). This is because there is less necessity to prevent collisions between pedestrians.

For example, referring to FIG. 16, when a VRU 210 transmits a message, the VRU 210 may add a third extension field (or DeviceType extension field) to a V2N header by marking the third bit of the ExtensionFlag field of the V2N header included in a V2N message (e.g., configures a specific value of 1). Thus, the VRU 210 may inform a V2N server that the type of device related to a V2X message or VRU message (or PSM) included in a V2N payload is a pedestrian through the third extension field.

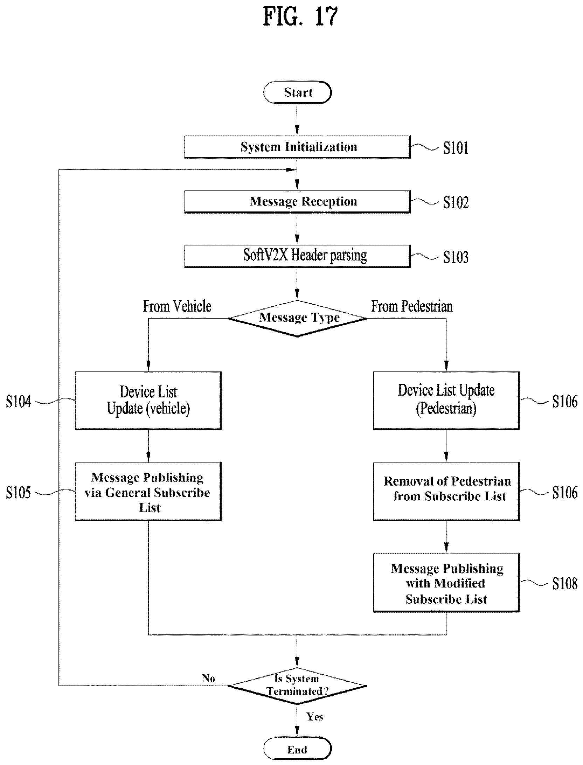

FIG. 17 is a diagram for explaining a method by which a V2N server filters transmission targets based on the header of a V2N message received from a UE.

Referring to FIG. 17, the V2N server may perform pedestrian-to-pedestrian (P2P) transmission filtering based on an extension flag field and extension field included in a V2N header of a received V2N message.

The V2N server may identify or check what information the extension field included in the V2N header contains based on the extension flag field included in the V2N header and perform the P2P transmission filtering based on the identified extension field. For example, to perform the P2P transmission filtering, the V2N server may instruct UEs and/or VRU devices to configure the extension flag field and extension field related to the functionality (P2P filtering) that the V2N server intends to provide. In this case, the UEs and/or VRU devices may transmit the V2N message including the extension flag field and extension field to the V2N server. For example, the V2N server may identify that the extension field additionally included in the V2N header is for the device type based on the presence of the extension flag field in the V2N header where the third bit from the LSB is set to 1.

Specifically, when the system starts, the V2N server may initialize parameters related to the system (S101). The V2N server may receive the V2N message (including V2X messages or VRU messages) from the UEs and/or VRU devices (S102). The V2N server may parse the V2N header in the V2N message (S103). In this case, if the device type included in the extension field is a vehicle, the V2N server may update a list of devices related to the vehicle (S104). The V2N server may forward or publish the V2N message to neighboring devices or neighboring UEs in the subscription list or device list that desire to receive the V2N message (S105).

Alternatively, if the device type included in the extension field is a pedestrian, the V2N server may update a list of devices related to the pedestrian (and/or store the list in a data base (DB)) (S106). The V2N server may modify the subscription list such that neighboring devices or neighboring UEs related to the pedestrian are excluded from the subscription list or device list (S107). The V2N server may forward or publish the V2N message based on the modified subscription list (S108). In this case, the V2N server may not forward the V2N message to pedestrians

Hereinafter, a method by which a V2N server provides an aggregated message obtained by aggregating received V2N messages based on an extension flag and extension field of a V2N header as an additional function will be described in detail.

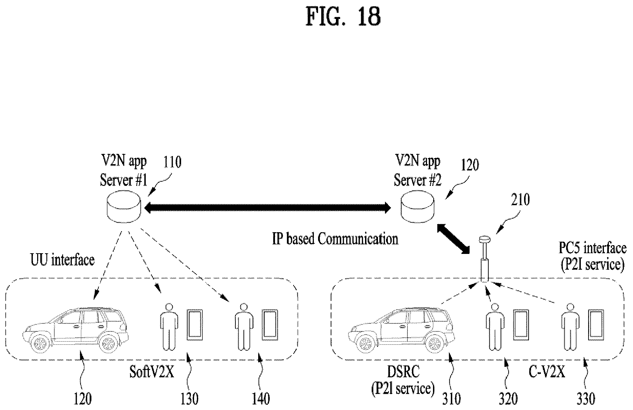

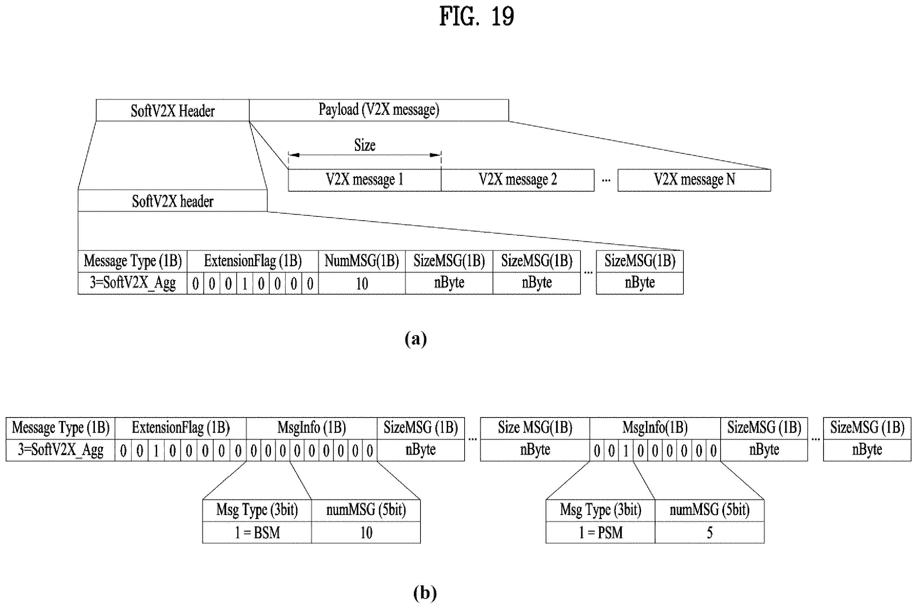

FIGS. 18 and 19 are diagrams for explaining a method by which a V2N server provides an aggregated message obtained by aggregating received V2N messages based on an extension flag and extension field of a V2N header.

Referring to FIG. 18, an RSU 210 may transmit an aggregated message obtained by aggregating received V2X messages or VRU messages (e.g., BSM, PSM, etc.) to a second V2N server 120. The second V2N server 120 may also transmit an aggregated message to the first V2N server 110. In this case, the efficiency of a device (i.e., RSU, first V2N server, and/or second V2N server) that transmits a conventional V2X message as an IP-based message may be improved.

Specifically, an extension flag type included in a header of a V2N message may include a bit value that indicates a first aggregation type (e.g., the fourth bit from the LSB is set to 1) or a second aggregation type (e.g., the fifth bit from the LSB is set to 1). In this case, as shown in FIG. 19(a), the first aggregation type corresponds to a case where the V2N header additionally includes an extension field (NumMSG) indicating the number of messages in the aggregated message and an extension field (SizeMsg) indicating the size of each message. As shown in FIG. 19(b), the second aggregation type corresponds to a case where an extension field (MsgInfo) indicating the message type and number of messages and an extension field (SizeMsg) indicating the size of the corresponding messages. In particular, the second aggregation type may aggregate messages for other types.

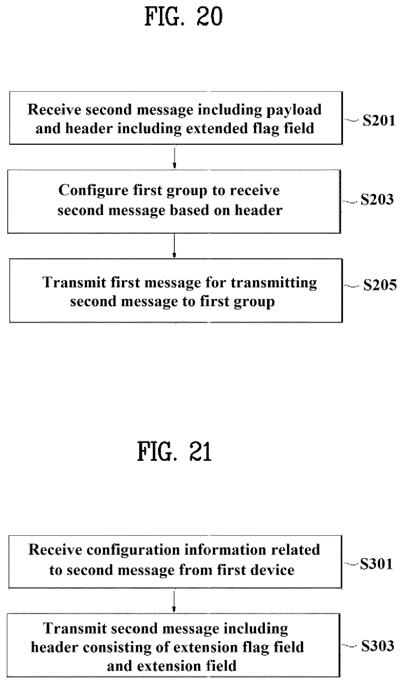

FIG. 20 is a diagram for explaining a method by which a first device configures a first group to receive a second message based on a header included in the second message.

The first device is a device that receives V2N messages from neighboring UEs including the second device. The first device may be a Soft V2X server and/or RSU that supports Soft V2X described above. The second device may be a UE or VRU device that receives services related to Soft V2X. In the following, each of the first and second messages may correspond to a V2N message containing a payload for a V2X message and transmitted in UL and/or DL. The first device may transmit configuration information related to the uplink to the second device and may transmit configuration information and/or control information related to the DL to UEs related to the first group.

For example, the first device may receive the second message based on UL configuration information on a demodulation reference signal (DMRS), frequency hopping, an antenna port, and a codebook related to the UL described above. Alternatively, the first device may receive the second message based on sidelink configuration information such as synchronization information, a resource pool, a transmission parameter, a threshold speed, an MCS, and a maximum number of times of transmission related to sidelink communication

Referring to FIG. 20, the first device may receive the second message including a payload and a header including an extension flag field from the second device (S201). As described above, the extension flag field may include information indicating the number of extension fields additionally configured to the header and/or information indicating the type of additional information included in the extension fields. For example, if bits with specific values among bits included in the extension flag field have N positions, the header may include N extension fields for N additional information types. That is, the header may be configured to include additional extension fields as many as the number of bit positions configured with the specific values among the bits included in the extension flag field. For example, when a specific value (e.g., 1) is configured for the LSB of the extension flag field and the third bit from LSB, the header may additionally include an extension field containing information on the direction related to the V2X message included in the payload (or an extension field where the type of additional information is direction information) and an extension field containing information on the device type.

Alternatively, based on the extension flag field, the first device may identify or check whether a sub-extension flag field for defining a new additional information type is additionally included in the header. For example, if a specific value is configured for the MSB of the extension flag field, the first device may recognize that the header further includes the sub-extension flag field in addition to the extension flag field. In this case, the first device may specify additional information types of additionally included sub-extension fields based on the sub-extension flag field. Alternatively, the sub-extension flag field may be added to the header only when the speed of the second device is higher than a predetermined threshold speed. For example, if the second device is faster than the predetermined threshold speed, the second device may include the sub-extension flag field in the header of the second message. The first device may obtain more additional information about the second device from the sub-extension flag field and the sub-extension fields related thereto. The first device may quickly provide additional functions related to the speed of the second device based on additional information obtained from the sub-extension flag field. Alternatively, if the GPS error rate of the second device is more than a predetermined threshold error, the second device may further include the sub-extension flag field in the header of the second message. Alternatively, if the sub-extension flag field is included in the second message, the first device may form the first group consisting of devices located within a predetermined threshold distance from a position indicated by the sub-extension flag field.

Next, the first device may form the first group consisting of devices to receive the second message based on the extension flag field and at least one extension field related to the extension flag field, which are included in the header (S203). For example, the first device may provide additional functions related to P2P message filtering, as described above. In this case, the first device may configure the first group by excluding a specific type of device from a pre-registered device list (i.e., a list of devices that desire to receive V2N services) according to the extension flag field and extension field. For example, the first device may identify that the extension field included in the header includes additional information on the device type, based on bit information included in the extension flag field (i.e., information on the position of a bit where a specific value is configured). The first device may obtain additional information on a first device type, which is a pedestrian or pedestrian device, from the extension field. In this case, the first device may exclude devices corresponding to the first device type from the device list and then set the device list where the devices corresponding to the first device type are excluded as the first group.

Next, the first device may transmit a first message to the first group to forward the second message to the first group (S205). In this case, the first message may be the same as the second message, or the first message may be a message containing the payload included in the second message as it is without decoding or encoding the payload.

Alternatively, the first device may receive inter-UE messages for direct UE-to-UE communication from neighboring devices through the second message and then transmit a third message obtained by aggregating the inter-UE messages to the server. In this case, the header of the third message may include the extension flag field having a specific value configured at the position of a bit related to a first additional information type for aggregation of inter-UE messages. As described above, the extension fields include an extension field (or Msginfo extension field) containing additional information on the number and/or message type of aggregated inter-UE messages and an extension field (or SizeMSG extension field) containing additional information on the size of each inter-UE message. In this case, the server may recognize based on the extension flag field included in the header that the third message includes a payload obtained by aggregating a plurality of inter-UE messages. The server may obtain information on the number and size of aggregated inter-UE messages through the extension fields.

Alternatively, the first device may provide the second device with configuration information including additional information types required to specify the first group or provide the above-described additional functions. The second device may transmit additional information on an additional information type that the second device is capable of obtaining among additional information types related to the configuration information to the first device, based on the extension flag field and the header including the extension field. In this case, the first device may quickly obtain the additional information on the additional information type for specifying the additional functions or the first group only by decoding the header (i.e., without decoding the payload of the second message).

FIG. 21 is a diagram for explaining a method by which a second device transmits a second message to a first device.

Referring to FIG. 21, the second device may receive configuration information on the second message from the first device (S301). As described above, the configuration information may include information on an additional information type for specifying a first group to which the first device transmits the second message information on an additional information type for providing additional functions based on the second message.

The second device may transmit the second message including a header where an extension flag field and extension field for a specific additional information type are configured to the first device based on the configuration information (S303). As described above, the extension flag field may have a specific value configured at the position of a bit related to the additional information type included in the configuration information. In this case, the type of additional information included in the extension field additionally configured in the header may be identified or specified by the extension flag field.

For example, if bits with specific values among bits included in the extension flag field have N positions, the header may include N extension fields for N additional information types. That is, the header may be configured to include additional extension fields as many as the number of bit positions configured with the specific values among the bits included in the extension flag field. For example, when a specific value (e.g., 1) is configured for the LSB of the extension flag field and the third bit from LSB, the header may additionally include an extension field containing information on the direction related to the V2X message included in the payload (or an extension field where the type of additional information is direction information) and an extension field containing information on the device type.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

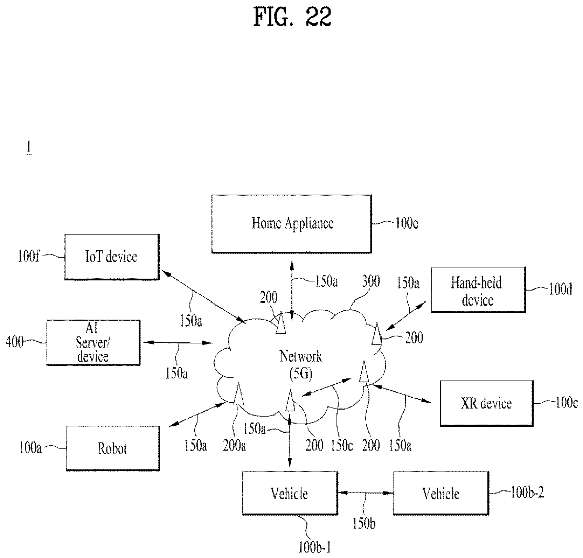

FIG. 22 illustrates a communication system applied to the present disclosure.

Referring to FIG. 22, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

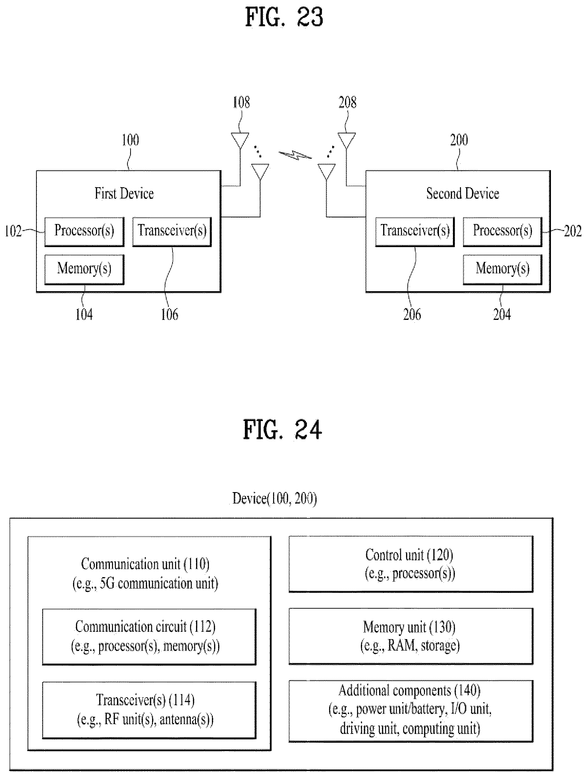

FIG. 23 illustrates a wireless device applicable to the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or first device 100 may include the processor(s) 102 connected to the transceiver(s) 106 and the memory(s) 104. The memory(s) 104 may include at least one program for performing operations related to the embodiments described above in FIGS. 11 to 21.

The processor(s) 102 may control the transceiver(s) 106 to receive a second message including a payload and a header including an extension flag field from a second device; control the transceiver(s) 106 to transmit a first message to a first group based on the second message; identify an additional information type of an extension field additionally configured in the header based on the extension flag field; and obtain additional information related to the payload from the extension field based on the additional information type. In this case, the first group may be configured based on the additional information.

Alternatively, the processor(s) 102 and the memory(s) 104 may be included in a chipset configured to transmit a first message. The chipset may include: at least one processor; and at least one memory operably connected to the at least one processor and configured to, when executed, cause the at least one processor to perform operations. The operations may include: receiving a second message including a payload and a header including an extension flag field from a second device; and transmitting the first message to a first group based on the second message. The processor(s) 102 may be configured to: identify an additional information type of an extension field additionally configured in the header based on the extension flag field; and obtain additional information related to the payload from the extension field based on the additional information type. The first group may be configured based on the additional information. The processor(s) 102 may perform operations related to the embodiments described in FIGS. 11 to 21 based on the program included in the memory(s) 104.

Alternatively, there is provided a computer-readable storage medium including at least one computer program configured to perform operations of transmitting a first message in a wireless communication system. The computer-readable storage medium may include the at least one computer program. The at least one computer program may be stored on the computer-readable storage medium. The operations may include: receiving a second message including a payload and a header including an extension flag field from a second device; and transmitting the first message to a first group based on the second message. The extension flag field may include information on a bit for identifying an additional information type of an extension field additionally configured in the header. The extension field may include additional information related to the payload for the identified additional information type. The first group may be configured based on the additional information.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or second device 200 may include the processor(s) 202 connected to the transceiver(s) 206 or an RF transceiver and the memory(s) 204. The memory(s) 204 may include at least one program for performing operations related to the embodiments described above in FIGS. 11 to 21.

The processor(s) 202 may be configured to control the transceiver(s) 206 to receive configuration information related to a second message from a first device; and transmit the second message including a payload and a header including an extension flag field to the first device based on the configuration information. The header of the second message may include: the extension flag field having a specific value configured at a bit position related to an additional information type included in the configuration information; and an extension field including additional information related to the additional information type. The second message may be transmitted to a first group configured based on the additional information through the first device.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

FIG. 24 illustrates another example of a wireless device applied to the present disclosure. The wireless device may be implemented in various forms according to a use-case/service (refer to FIG. 22)

Referring to FIG. 24, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

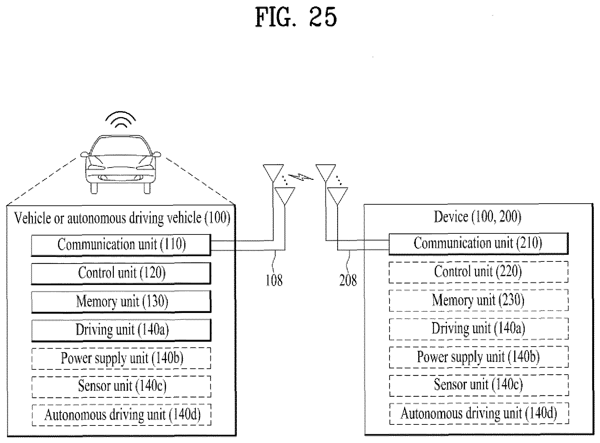

FIG. 25 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims, not by the above description, and all changes coming within the meaning of the appended claims are intended to be embraced therein.

### INDUSTRIAL APPLICABILITY

The above-described embodiments of the present disclosure are applicable to various mobile communication systems.

## Claims

1. A method of transmitting a first message by a first device (100) in a wireless communication system, the method comprising:
receiving (S201), from a second device (200), a second message including a payload and a header including an extension flag field; and
transmitting (S205), to a first group, the first message including the payload of the second message based on the second message,
wherein the first device (100):
identifies an additional information type of an extension field additionally configured in the header based on the extension flag field; and
obtains additional information related to the payload from the extension field based on the additional information type, and
wherein the first group is configured (S203) based on the additional information.

2. The method of claim 1, wherein based on acquisition of information related to a first device type from the extension field of which the additional information type is a device type, the first group is configured (S203) based on excluding devices corresponding to the first device type from a pre-registered subscription list.

3. The method of claim 2, wherein the first device type is a device type related to pedestrians.

4. The method of claim 1, wherein the additional information type is specified based on a position of a bit with a specific value in the extension flag field.

5. The method of claim 1, wherein based on that a number of positions of bits with specific values in the extension flag field is N, the header includes N extension fields.

6. The method of claim 1, wherein the first message including the payload of the second message is transmitted to the first group without decoding and encoding the payload included in the second message.

7. The method of claim 1, further comprising:
transmitting a third message obtained by aggregating messages received from a plurality of devices to a first server (120).

8. The method of claim 7, wherein a header of the third message includes:
an extension flag field with a specific value configured at a bit position related to a first additional information type for message aggregation;
an extension field including information on a number of the aggregated messages; and
an extension field including information on a size of each message.

9. The method of claim 1, wherein based on a most significant bit, MSB, of the extension flag field has a specific value, the header of the second message further includes a sub-extension flag field and a sub-extension field related to the sub-extension flag field.

10. The method of claim 1, further comprising:
transmitting, to the second device (200), configuration information including information related to the additional information type.

11. A method of transmitting a second message by a second device (200) in a wireless communication system, the method comprising:
receiving (S301), from a first device (100), configuration information related to the second message; and
transmitting (S303), to the first device (100), the second message including a payload and a header including an extension flag field based on the configuration information,
wherein the header of the second message includes:
the extension flag field having a specific value configured at a bit position related to an additional information type included in the configuration information; and
an extension field including additional information related to the additional information type, and
wherein a first message including the payload of the second message is transmitted (S205) to a first group configured based on the additional information through the first device (100).

12. A first device (100) configured to transmit a first message in a wireless communication system, the first device (100) comprising:
a radio frequency, RF, transceiver (106); and
a processor (102) connected to the RF transceiver (106),
wherein the processor (102) is configured to:
control the RF transceiver (106) to receive (S201), from a second device (200), a second message including a payload and a header including an extension flag field;
control the RF transceiver (106) to transmit (S205), to a first group, the first message including the payload of the second message based on the second message;
identify an additional information type of an extension field additionally configured in the header based on the extension flag field; and
obtain additional information related to the payload from the extension field based on the additional information type, and
wherein the first group is configured (S203) based on the additional information.

13. A second device (200) configured to transmit a second message in a wireless communication system, the second device (200) comprising:
a radio frequency, RF, transceiver (206); and
a processor (202) connected to the RF transceiver (206),
wherein the processor (202) is configured to control the RF transceiver (206) to:
receive (S301), from a first device (100), configuration information related to the second message; and
transmit (S303), to the first device (100), the second message including a payload and a header including an extension flag field based on the configuration information,
wherein the header of the second message includes:
the extension flag field having a specific value configured at a bit position related to an additional information type included in the configuration information; and
an extension field including additional information related to the additional information type, and
wherein a first message including the payload of the second message is transmitted (S205) to a first group configured based on the additional information through the first device (100).

14. A computer-readable storage medium comprising at least one computer program configured to perform operations of transmitting a first message in a wireless communication system,
wherein the computer-readable storage medium comprises the at least one computer program,
wherein the at least one computer program is stored on the computer-readable storage medium,
wherein the operations comprise:
receiving (S201), from a second device (200), a second message including a payload and a header including an extension flag field; and
transmitting (S205), to a first group, the first message including the payload of the second message based on the second message,
wherein the extension flag field includes information on a bit for identifying an additional information type of an extension field additionally configured in the header,
wherein the extension field includes additional information related to the payload for the identified additional information type, and
wherein the first group is configured (S203) based on the additional information.

## Patentansprüche

1. Verfahren zum Senden einer ersten Nachricht durch ein erstes Gerät (100) in einem drahtlosen Kommunikationssystem, wobei das Verfahren umfasst:
Empfangen (S201) einer zweiten Nachricht von einem zweiten Gerät (200), wobei die zweite Nachricht eine Nutzlast und einen Header mit einem Erweiterungsflag-Feld enthält; und
Senden (S205) der ersten Nachricht, die die Nutzlast der zweiten Nachricht enthält, an eine erste Gruppe auf der Grundlage der zweiten Nachricht,
wobei das erste Gerät (100):
einen zusätzlichen Informationstyp eines im Header zusätzlich konfigurierten Erweiterungsfeldes auf der Grundlage des Erweiterungsflag-Feldes identifiziert; und
auf der Grundlage des zusätzlichen Informationstyps zusätzliche Informationen, die sich auf die Nutzlast beziehen, aus dem Erweiterungsfeld abruft, und
wobei die erste Gruppe auf der Grundlage der zusätzlichen Informationen konfiguriert wird (S203).

2. Verfahren nach Anspruch 1, wobei auf der Grundlage des Erfassens von Informationen, die sich auf einen ersten Gerätetyp beziehen, aus dem Erweiterungsfeld, dessen zusätzlicher Informationstyp ein Gerätetyp ist, die erste Gruppe konfiguriert wird (S203), indem Geräte, die dem ersten Gerätetyp entsprechen, aus einer vorab registrierten Abonnementliste ausgeschlossen werden.

3. Verfahren nach Anspruch 2, wobei der erste Gerätetyp ein Gerätetyp ist, der sich auf Fußgänger bezieht.

4. Verfahren nach Anspruch 1, wobei der zusätzliche Informationstyp auf der Grundlage einer Position eines Bits mit einem bestimmten Wert im Erweiterungsflag-Feld festgelegt wird.

5. Verfahren nach Anspruch 1, wobei der Header N Erweiterungsfelder enthält, basierend darauf, dass eine Anzahl von Positionen von Bits mit bestimmten Werten im Erweiterungsflag-Feld N beträgt.

6. Verfahren nach Anspruch 1, wobei die erste Nachricht, die die Nutzlast der zweiten Nachricht enthält, an die erste Gruppe übertragen wird, ohne die in der zweiten Nachricht enthaltene Nutzlast zu decodieren und zu codieren.

7. Verfahren nach Anspruch 1, das ferner umfasst:
Senden einer dritten Nachricht, die durch Aggregieren von von einer Vielzahl von Geräten empfangenen Nachrichten erhalten wurde, an einen ersten Server (120).

8. Verfahren nach Anspruch 7, wobei ein Header der dritten Nachricht umfasst:
ein Erweiterungsflag-Feld mit einem spezifischen Wert, der an einer Bitposition konfiguriert ist, die sich auf einen ersten zusätzlichen Informationstyp für die Nachrichtenaggregation bezieht;
ein Erweiterungsfeld, das Informationen über eine Anzahl der aggregierten Nachrichten enthält; und
ein Erweiterungsfeld, das Informationen über eine Größe jeder Nachricht enthält.

9. Verfahren nach Anspruch 1, wobei, basierend darauf, dass ein höchstwertiges Bit, MSB, des Erweiterungsflag-Feldes einen bestimmten Wert aufweist, der Header der zweiten Nachricht ferner ein Untererweiterungsflag-Feld und ein mit dem Untererweiterungsflag-Feld in Zusammenhang stehendes Untererweiterungsfeld enthält.

10. Verfahren nach Anspruch 1, das ferner umfasst:
Senden von Konfigurationsinformationen, die Informationen bezüglich des zusätzlichen Informationstyps enthalten, an das zweite Gerät (200).

11. Verfahren zum Senden einer zweiten Nachricht durch ein zweites Gerät (200) in einem drahtlosen Kommunikationssystem, wobei das Verfahren umfasst:
Empfangen (S301) von Konfigurationsinformationen, die sich auf die zweite Nachricht beziehen, von einem ersten Gerät (100); und
Senden (S303) der zweiten Nachricht, die eine Nutzlast und einen Header mit einem Erweiterungsflag-Feld enthält, an das erste Gerät (100) auf der Grundlage der Konfigurationsinformationen,
wobei der Header der zweiten Nachricht umfasst:
das Erweiterungsflag-Feld, das einen spezifischen Wert aufweist, der an einer Bitposition konfiguriert ist, die sich auf einen in den Konfigurationsinformationen enthaltenen zusätzlichen Informationstyp bezieht; und
ein Erweiterungsfeld, das zusätzliche Informationen enthält, die sich auf den zusätzlichen Informationstyp beziehen, und
wobei eine erste Nachricht, die die Nutzlast der zweiten Nachricht enthält, über das erste Gerät (100) an eine erste Gruppe übertragen wird (S205), die auf der Grundlage der zusätzlichen Informationen konfiguriert ist.

12. Ein erstes Gerät (100), das so konfiguriert ist, dass es eine erste Nachricht in einem drahtlosen Kommunikationssystem überträgt, wobei das erste Gerät (100) umfasst:
einen Hochfrequenz, HF, -Transceiver (106); und
einen mit dem HF-Transceiver (106) verbundenen Prozessor (102),
wobei der Prozessor (102) so konfiguriert ist, um:
den HF-Transceiver (106) so zu steuern, dass er von einem zweiten Gerät (200) eine zweite Nachricht empfängt (S201), die eine Nutzlast und einen Header mit einem Erweiterungsflag-Feld enthält;
den HF-Transceiver (106) zu steuern, um die erste Nachricht, die die Nutzlast der zweiten Nachricht enthält, basierend auf der zweiten Nachricht an eine erste Gruppe zu senden (S205);
einen zusätzlichen Informationstyp eines im Header zusätzlich konfigurierten Erweiterungsfeldes auf der Grundlage des Erweiterungsflag-Feldes zu identifizieren; und
Zusatzinformationen zu erhalten, die sich auf die Nutzlast beziehen, aus dem Erweiterungsfeld auf der Grundlage des Zusatzinformationstyps, und
wobei die erste Gruppe auf der Grundlage der zusätzlichen Informationen konfiguriert wird (S203).

13. Ein zweites Gerät (200), das zum Senden einer zweiten Nachricht in einem drahtlosen Kommunikationssystem konfiguriert ist, wobei das zweite Gerät (200) umfasst:
einen Hochfrequenz, HF, -Transceiver (206); und
einen mit dem HF-Transceiver (206) verbundenen Prozessor (202),
wobei der Prozessor (202) so konfiguriert ist, dass er den HF-Transceiver (206) so steuert, dass dieser:
Konfigurationsinformationen, die sich auf die zweite Nachricht beziehen, von einem ersten Gerät (100) empfängt (S301); und
die zweite Nachricht an das erste Gerät (100) sendet (S303), wobei die zweite Nachricht eine Nutzlast und einen Header mit einem Erweiterungsflag-Feld enthält, das auf den Konfigurationsinformationen basiert,
wobei der Header der zweiten Nachricht umfasst:
das Erweiterungsflag-Feld mit einem spezifischen Wert, der an einer Bitposition konfiguriert ist, die sich auf einen in den Konfigurationsinformationen enthaltenen zusätzlichen Informationstyp bezieht; und
ein Erweiterungsfeld, das zusätzliche Informationen enthält, die sich auf den zusätzlichen Informationstyp beziehen, und
wobei eine erste Nachricht, die die Nutzlast der zweiten Nachricht enthält, über das erste Gerät (100) an eine erste Gruppe übertragen wird (S205), die auf der Grundlage der zusätzlichen Informationen konfiguriert ist.

14. Ein computerlesbares Speichermedium, das mindestens ein Computerprogramm umfasst, das so konfiguriert ist, dass es Operationen zum Senden einer ersten Nachricht in einem drahtlosen Kommunikationssystem ausführt,
wobei das computerlesbare Speichermedium das mindestens eine Computerprogramm umfasst,
wobei das mindestens eine Computerprogramm auf dem computerlesbaren Speichermedium gespeichert ist,
wobei die Vorgänge umfassen:
Empfangen (S201) einer zweiten Nachricht von einem zweiten Gerät (200), wobei die zweite Nachricht eine Nutzlast und einen Header mit einem Erweiterungsflag-Feld enthält; und
Senden (S205) der ersten Nachricht, die die Nutzlast der zweiten Nachricht enthält, an eine erste Gruppe auf der Grundlage der zweiten Nachricht,
wobei das Erweiterungsflag-Feld Informationen über ein Bit enthält, um einen zusätzlichen Informationstyp eines im Header zusätzlich konfigurierten Erweiterungsfeldes zu identifizieren,
wobei das Erweiterungsfeld zusätzliche Informationen enthält, die sich auf die Nutzlast für den identifizierten zusätzlichen Informationstyp beziehen, und
wobei die erste Gruppe auf der Grundlage der zusätzlichen Informationen konfiguriert wird (S203).

## Revendications

1. Procédé de transmission d'un premier message par un premier dispositif (100) dans un système de communication sans fil, le procédé comprenant:
la réception (S201), en provenance d'un deuxième dispositif (200), d'un deuxième message comprenant une charge utile et un en-tête comportant un champ indicateur d'extension; et
la transmission (S205), à un premier groupe, du premier message comprenant la charge utile du deuxième message sur la base de ce dernier,
dans lequel le premier dispositif (100):
identifie un type d'informations supplémentaires correspondant à un champ d'extension configuré en plus dans l'en-tête, sur la base du champ indicateur d'extension; et
obtient des informations supplémentaires relatives à la charge utile à partir du champ d'extension, en fonction du type d'informations supplémentaires, et
dans lequel le premier groupe est configuré (S203) sur la base des informations supplémentaires.

2. Procédé selon la revendication 1, dans lequel sur la base des informations relatives à un premier type de dispositif, provenant du champ d'extension dont le type d'informations supplémentaires correspond à un type de dispositif, le premier groupe est configuré (S203) en excluant les dispositifs correspondant au premier type de dispositif d'une liste d'abonnements préenregistrée.

3. Procédé selon la revendication 2, dans lequel le premier type de dispositif est un type de dispositif concernant les piétons.

4. Procédé selon la revendication 1, dans lequel le type d'informations supplémentaires est déterminé en fonction de la position d'un bit ayant une valeur spécifique dans le champ indicateurs d'extension.

5. Procédé selon la revendication 1, dans lequel étant donné que le nombre de positions de bits ayant des valeurs spécifiques dans le champ indicateur d'extension est égal à N, l'en-tête comprend N champs d'extension.

6. Procédé selon la revendication 1, dans lequel le premier message, qui contient la charge utile du deuxième message, est transmis au premier groupe sans que la charge utile contenue dans le deuxième message ne soit ni décodée ni codée.

7. Procédé selon la revendication 1, comprenant en outre:
la transmission d'un troisième message obtenu par agrégation des messages reçus en provenant d'une pluralité de dispositifs à un premier serveur (120).

8. Procédé selon la revendication 7, dans lequel un en tête du troisième message comprend:
un champ indicateur d'extension avec une valeur spécifique configurée dans une position de bit relative à un premier type d'informations supplémentaires pour l'agrégation de messages;
un champ d'extension comprenant des informations relatives au nombre des messages agrégés; et
un champ d'extension comprenant des informations relatives à la taille de chaque message.

9. Procédé selon la revendication 1, dans lequel si le bit de poids fort, MSB, du champ indicateur d'extension prend une valeur spécifique, l'en-tête du deuxième message comprend en outre un champ indicateur de sous-extension et un champ de sous-extension associé à au champ indicateur de sous-extension.

10. Procédé selon la revendication 1, comprenant en outre:
la transmission, à un deuxième dispositif (200), les informations de configuration comprenant des informations relatives au type d'informations supplémentaires.

11. Procédé de transmission d'un deuxième message par un deuxième dispositif (200) dans un système de communication sans fil, le procédé comprenant:
la réception (S301), en provenance d'un premier dispositif (100), d'informations de configuration relatives au deuxième message; et
la transmission (S303), au premier dispositif (100), d'un deuxième message comprenant une charge utile et un en-tête comportant un champ indicateur d'extension sur la base des informations de configuration,
dans lequel l'en-tête du deuxième message comprend:
le champ indicateur d'extension ayant une valeur spécifique configurée à une position de bit associée à un type d'informations supplémentaires inclus dans les informations de configuration; et
un champ d'extension contenant des informations supplémentaires relatives au type d'informations supplémentaires, et
dans lequel un premier message, comprenant la charge utile du deuxième message, est transmis (S205) à un premier groupe configuré en fonction des informations supplémentaires, par l'intermédiaire du premier dispositif (100).

12. Premier dispositif (100) configuré pour transmettre un premier message dans un système de communication sans fil, le dispositif (100) comprenant:
un émetteur-récepteur de radiofréquence, RF, (106); et
un processeur (102) connecté à l'émetteur-récepteur (106),
dans lequel le processeur (102) est configuré pour:
amener le émetteur-récepteur RF (106) ) à recevoir (S201), en provenance d'un deuxième dispositif (200), un deuxième message comprenant une charge utile et un en-tête comportant un champ indicateur d'extension;
amener l' émetteur-récepteur RF (106) à transmettre (S205), à un premier groupe, le premier message comprenant la charge utile du deuxième message sur la base de ce dernier,
identifier un type d'informations supplémentaires correspondant à un champ d'extension configuré en plus dans l'en-tête, sur la base du champ indicateur d'extension; et
obtenir des informations supplémentaires relatives à la charge utile à partir du champ d'extension, en fonction du type d'informations supplémentaires, et
dans lequel le premier groupe est configuré (S203) sur la base des informations supplémentaires.

13. Deuxième dispositif (200) configuré pour transmettre un deuxième message dans un système de communication sans fil, le deuxième dispositif (200) comprenant:
un émetteur-récepteur de radiofréquence, RF, (206); et
un processeur (202) connecté à l'émetteur-récepteur (206),
dans lequel un processeur (202) est configuré pour amener l'émetteur récepteur RF (206) à:
recevoir (S301), en provenance d'un premier dispositif (100), d'informations de configuration relatives au deuxième message; et
transmettre (S303), au premier dispositif (100), le deuxième message comprenant une charge utile et un en-tête comportant un champ indicateur d'extension en fonction des informations de configuration,
dans lequel l'en-tête du deuxième message comprend:
le champ indicateur d'extension ayant une valeur spécifique configurée à une position de bit associée à un type d'informations supplémentaires inclus dans les informations de configuration; et
un champ d'extension contenant des informations supplémentaires relatives au type d'informations supplémentaires, et
dans lequel un premier message, comprenant la charge utile du deuxième message, est transmis (S205) à un premier groupe configuré en fonction des informations supplémentaires, par l'intermédiaire du premier dispositif (100).

14. Support d'enregistrement lisible par ordinateur comprenant au moins un programme informatique configuré pour exécuter les opérations consistant à transmettre un premier message dans un système de communication sans fil,
dans lequel le support d'enregistrement lisible par ordinateur comprend l'au moins un programme informatique,
dans lequel l'au moins un programme informatique est stocké sur le support d'enregistrement lisible par ordinateur,
les opérations comprenant:
la réception (S201), en provenance d'un deuxième dispositif (200), d'un deuxième message comprenant une charge utile et un en-tête comportant un champ indicateur d'extension; et
la transmission (S205), à un premier groupe, du premier message comprenant la charge utile du deuxième message sur la base de ce dernier,
dans lequel le champ indicateur d'extension comprend des informations relatives à un bit pour identifier un type d'informations supplémentaires d'un champ d'extension configuré en plus dans l'entête,
dans lequel un champ d'extension contenant des informations supplémentaires relatives à la charge utile pour le type identifié d'informations supplémentaires, et
dans lequel le premier groupe est configuré (S203) sur la base des informations supplémentaires.
